# EUROPEAN PATENT SPECIFICATION

(11) **EP 2 119 125 B1**
(45) Date of publication and mention of the grant of the patent: **27.03.2013**
(21) Application number: 08719445.2
(22) Date of filing: 31.01.2008
(51) Int. Cl.: H04L 12/403

(54) **BUS SYSTEM AND ASSOCIATED TRANSMISSION PROTOCOL**
BUS-SYSTEM UND ZUGEHÖRIGES ÜBERTRAGUNGSPROTOKOLL
SYSTÈME DE BUS ET PROTOCOLE DE TRANSMISSIONS ASSOCIÉ

(30) Priority: 05.02.2007 IT TV20070013
(43) Date of publication of application: 18.11.2009
(73) Proprietor: NICE S.P.A., 31046 Oderzo (Treviso) (IT)
(72) Inventor: MARCHETTO, Oscar, I-31046 Oderzo (Treviso) (IT); TOMASELLA, Sergio, I-31020 San Polo Di Piave (Treviso) (IT); ANDRIOLETTI, Alberto, I-30173 Favaro Veneto (Venezia) (IT); APREA, Vincenzo, I-30026 Portogruaro (Venezia) (IT)
(74) Representative: Dragotti, Gianfranco
(86) International application number: PCT/IB2008/050340
(87) International publication number: WO 2008/096295

(56) References cited:
- US-A- 5 343 474
- ANDREW S. TANENBAUM: "Computer Networks" 1996, PRENTICE-HALL , XP002518672 page 330, paragraph 4.6.4 - page 333

## Description

The invention relates to a bus system and associated transmission protocol, used in systems for actuating gates, doors, main entrances, roller shutters or the like. The invention also relates to a method for transmitting signals on the bus.

By way of example reference shall be made below to actuating systems for gates of the leaf type (the actuating system for a sliding gate envisages only one motor).

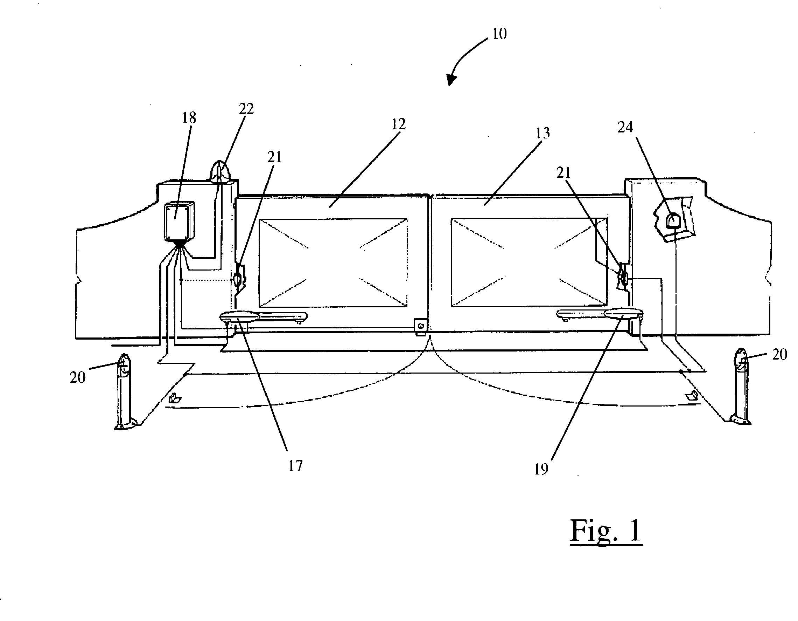

With reference to Fig. 1, a known actuating system 10 for a gate with two leaves 12, 13 comprises two motor units 17, 19, one for each leaf. A control unit 18 is fixed to the surrounding wall and is wired to all the other devices present in the actuating system, namely the pair of motor units 17, 19, two photocells 20 on a spacer post and two wall-mounted photocells 21, a flashing signalling lamp 22 and a wall-mounted operating device 24.

All these devices must be controlled by the control unit 18 and therefore - as can be seen in the "minimal" configuration shown in Fig. 1 - the system must have a large number of electric lines (for conveying the power supply and digital signals) entering and leaving the said control unit 18. Precisely in the system according to Fig. 1 the following are necessary:
3 wires for the operating device 24,
2 wires for the flashing lamp 22,
5 wires for the photocells 20,
5 wires for the wall-mounted photocells 21,
2 wires for an electric lock (not shown) and
3 wires for the motor units 17, 19,
giving a total of at least 20 wires leaving the control unit 18.

Owing to the safety regulations, the present systems envisage a greater number of accessory devices and the number of wires is destined to increase. In fact, the latest generation systems envisage 3 or 4 pairs of photocells, 1 flashing lamp, 2 or 3 control devices, 1 or 2 sensing edges as well as, obviously, 1 or 2 motors.

It must be emphasized that the elongated form of the motor is not determined merely by aesthetic considerations but also by structural requirements. The motor must have a length sufficient to contain a worm screw long enough to move the leaf through an arc of 110-120 degrees, and must have the least transverse volume since otherwise it would complicate installation on a wall or fence situated at right angles to the gate (in the closed position).

In other systems there is a smaller number of wiring leads since bus-type connection technology is used between the components of the system. Each device is connected to the control unit via only two wires and therefore the control unit 18 may have a smaller number of outgoing wires and precisely two wires for the motor units 17, 19, one wire for the flashing lamp 22, one wire for photocells 20 and one wire for a control device 24, resulting in a total of 8 wires. Each device, and therefore each pair of wires, has a corresponding connection terminal in the control unit 18.

Another example of this type can be found in the patent US 7,091,687 which describes a two-wire bus system. The control unit has a set of terminals (two wires for each terminal) for connection of the peripheral devices. The bus uses the known "master and slave" technique where the master function is assigned to the control unit, while the slave function is assigned to all the peripheral devices. This operating logic envisages that any command and/or information is managed and sent by the control unit to a peripheral device which sends a response to the control unit whenever a command and/or information is received from the outside.

For the command and/or the information to be sent to a certain peripheral device, all the devices must have a well defined "encoded address".

In the latest generation systems, where the safety regulations stipulate the use of several active and passive safety devices (various pairs of photocells, flashing lamps, multiple sensing edges, etc.), the flow of data on the bus is considerable and is mainly due to the fact that each command or information data sent by the control unit must have a corresponding response message from the peripheral device concerned. Consequently the interaction between the control unit and the peripheral devices may be slow and/or not optimum for ensuring the required level of safety, in particular in systems with a large number of peripheral devices.

In the abovementioned systems (Fig. 1) the motor units 17, 19 are pivotably mounted on the surrounding wall by means of suitable brackets and move together with the leaves 12, 13. The type of wire which connects the motor units 17, 19 to the control unit 18 must withstand the particular operating conditions, i.e. repeated bending with each movement and varying weather conditions (sun, cold, ice, etc.).

The simple insertion of the control unit 18 inside the motor units 17, 19 would result in a considerable increase in the longitudinal and transverse dimension of the said motor. In addition to the structural difficulties involved in housing it (resulting in a substantial increase in costs) and a significant deterioration in the aesthetic appearance, both due principally to the number of wires entering/leaving the motor units 17, 19 and their possible large size, it must be remembered that the motor could no longer be installed on walls or fences which are situated at right angles to the gate (in the closed position). The bundle of 8 to 20 pairs of wires, which must be flexible enough to bend during the movement of the leaves 12, 13 and which must withstand atmospheric agents over time, increase the complexity and the cost of the system. It is also necessary to mention the difficulty of installing the cables for such a large number of wires leaving the motor unit, with a probable increase in the risk of errors.

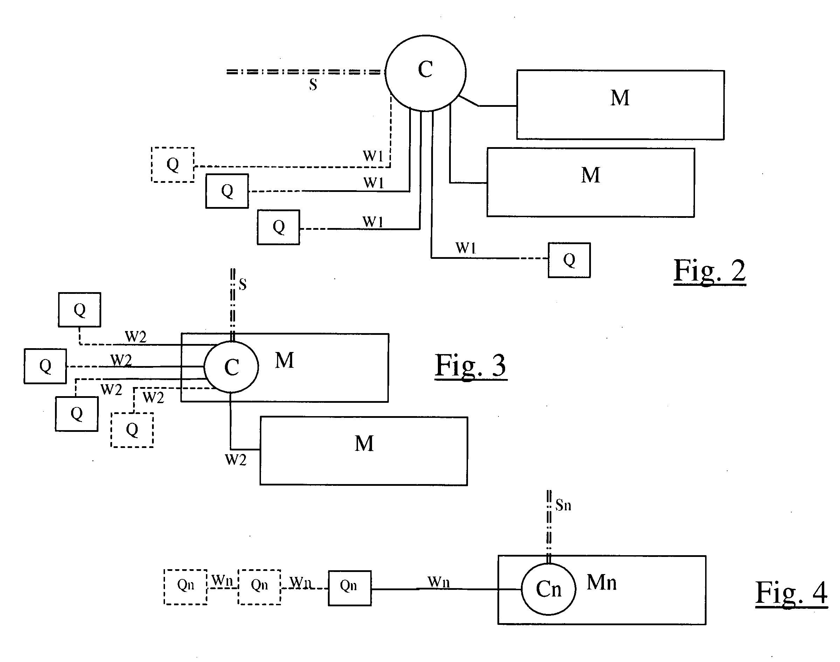

The two systems described are visible in orderly way in Figs. 2 and 3. A control unit C is powered by a line S and wired with (several) cables W1 or W2 to components Q of the system, two of which are the motor units M. The complexity of the wiring layout is evident, whether one uses a bus-type connection or not, and in particular remembering that the connections W1 on average have three wires and the connection W2 have two wires.

US 5 343 474 and "Computer Networks" (Andrew S, Tanembaum, 1996, Prentice-Hall) disclose bus systems.

The object of the invention is to provide an actuating system having bus system and associated transmission protocol which limits the wiring needed for the system and improves the response time thereof.

This object is achieved with an actuating system for moving gates, roller shutters or the like in which the transmission of signals between a control unit and peripheral components is performed according to a transmission protocol on a bus system characterized in that each peripheral component is adapted only to transmit (using suitable transmission means) its own signal to the control unit solely within a time window situated in a predetermined position with respect to a period for scanning the status of the peripheral components of the system.

In order to simplify the system, advantageously each time window has an invariable duration, although it is possible to envisage for instance sending particular signals on the bus, following which a peripheral component requests, or is obliged by the control unit, to perform transmission within a time window having a duration which is modified or variable over time.

In order to simplify the system advantageously each time window is univocally associated with a given peripheral component, namely each component may operate, i.e. transmit, only in that specific window.

In order to ensure optimum timing, the control unit may comprise a transmitter stage able to transmit on the bus a synchronizing signal, the period ofwhich defines the period for scanning the status of the peripheral components of the system. "Scanning period" is understood as referring to the cyclic period within which the control unit has polled or verified all the components of the system. The control unit comprises receiver processing means for receiving and processing the signal of a peripheral component solely within the time window pre-assigned to it.

The transmitter stage of the control unit may transmit periodically on the bus the synchronizing signal. This signal may be used by the peripheral components to determine the time window inside which they must be activated, for example calculating a constant delay with respect to the synchronizing signal, in such a way as to be in an invariable temporal position between two successive synchronizing signals.

Consequently it is advantageously possible to ensure that each time window is in an invariable position within two successive synchronizing signals. Nevertheless it is also possible to perform a cyclical permutation of the intervals so that on average each component is not always the last one to perform transmission.

Preferably, in order to establish an order for access to the bus, the same type of peripheral component is associated univocally with a given time window.

In fact, the safety devices such as photocells or sensing edges must always in any case transmit a signal on the bus since otherwise (if there is no signal) the control unit interprets the absence of signal as being an emergency situation. Therefore, to each pair of photocells a time window of their own is preferably assigned. Differently, the control devices (transponder cards, digital keypads, key-operated selectors, etc...) have associated with them a single and unique time window which can be exploited if necessary by one of them. Even in the case where several devices are present, the simultaneous activation of several devices of this type is highly unlikely. Incidental collisions on the bus may be tolerated.

Such an organization ensures rationalized assignment of the time windows to each peripheral component and a reduction in the duration of the working period between two synchronizing signals, namely a faster system is achieved.

The transmission protocol is therefore based on the method according to the invention for transmitting signals between a control unit and peripheral components on a bus used in actuating systems for moving gates, rollers shutters or the like, characterized in that each peripheral component is assigned a predefined time window within which only said component is allowed to transmit its own signal to the control unit. Preferably the predefined time window has an invariable duration.

The above considerations regarding the time windows and the management of the bus may be clearly understood as being also variants and/or embodiments of the method according to the invention.

Preferably the bus envisages the use of only two wires without a given polarity, and each device connected to it comprises a polarity adaptor.

The advantages of the invention will emerge more clearly from the following description of a preferred embodiment, illustrated in the accompanying drawings in which:
Fig. 1 shows a known actuating system;
Figs. 2 and 3 shows block diagrams of known actuating systems;
Fig. 4 shows a block diagram of an actuating system resulting from adoption of the invention;
Fig. 5 shows a functional diagram of the bus according to the invention;
Fig. 6 shows a time diagram of the signals present on the bus according to Fig. 5;
Fig. 7 shows a time diagram of the signals present on the bus according to Fig. 5;
Fig. 8 shows a diagram of two pairs of photocells.

The wiring of a system and a bus according to the invention are shown schematically in Fig. 4. A control unit Cn according to the invention is situated preferably inside the motor unit Mn and is powered by a line Sn (230 V or 24 V). The control unit Cn is wired with a single bifilar cable Wn to the components Qn, according to the invention, of the system, which are functionally the same as in Figs. 2 and 3. The control unit Cn could likewise also be situated in any one of the components Qn.

The wire Wn reaches a component Qn and from here passes to the next one. The simplification of the overall wiring is obvious and represents a major advantage of the invention.

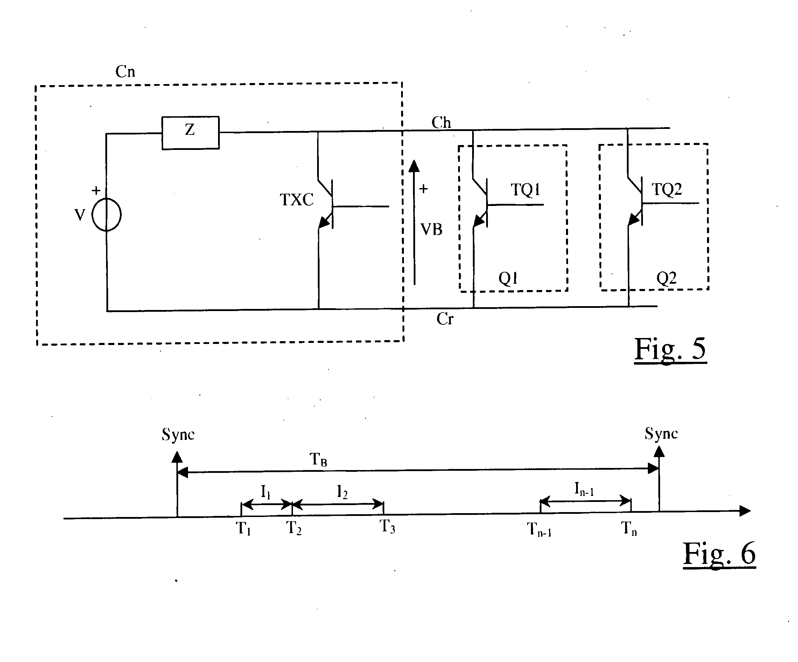

Fig. 5 shows a schematic illustration of the bus according to the invention. The control unit Cn, which is shown inside broken lines, is connected by means of two wires Ch, Cr to various components of the system, only two of which are shown and indicated within the broken lines by Q1, Q2. The wires Ch, Cr form the system bus and lead, inside or outside the control unit Cn, to a power supply voltage generator V which is formed with known circuit designs, and the associated output impedance Z. In parallel with each other and in shunt configuration between the wires Ch, Cr, downstream of the impedance Z, there are switching and transmission circuits/stages TXC, TQ1, TQ2, which are associated respectively with the control unit Cn and the two components Q1, Q2. The stages TXC, TQ1, TQ2 are chosen from any type and/or circuit component which is able to vary, upon command, its conductivity, in theory between zero and infinity, and shunt current between the wires Ch, Cr so as to produce a drop in voltage between them (bus voltage VB) downstream of the impedance Z. Each signal on the bus is transmitted generating voltage pulses of short duration and with suitable encoding, by means of switching of the stages TXC, TQ1, TQ2. Each variation in the voltage VB is detected by receiver stages (not shown) which are present in each component connected to the bus.

The brief duration of the signals, namely the temporary short-circuiting of the bus, may allow simultaneously the power supply to be transmitted to the components Q1, Q2 which have rectifier and filtering means for obtaining from the maximum value of the voltage VB a stabilized voltage. Advantageously a component Qn may comprise rectifier means adapted to make it indifferent to the polarity of the signals on the bus.

In order to control in an orderly manner transmission on the bus, the control unit Cn sends a synchronizing signal Sync via the stage TXC, at a periodic interval for example of 32 ms. The synchronizing signal Sync is transmitted in a normal operating mode (Normal Mode). Upon receiving the signal Sync the various components Q1, Q2 ..., Qn connected to the bus respond with a digital signal. The information sent varies depending on whether they consist of:
- safety devices, such as photocells and sensing edges, which respond always in order to signal their presence and their state;
- control devices, such as keypads or actuating photocells (interruption of the beam triggers an action in the system), which respond only if they have to trigger execution of a given procedure in the control unit Cn.

Each device Qn, depending on its characteristics, has a reserved response time window after the signal Sync, so as to avoid possible overlapping. The time division for access to the bus by the various devices is shown in Fig. 6.

The time interval T_{B} between two signals Sync, which for the sake of simplicity may be kept constant, defines the scanning period in which the control unit Cn checks/controls/commands the status of the components in the system.

Tᵢ denotes an i-th instant between two signal Sync, while Iᵢ denotes the i-th time window within which a device Qn must respond/transmit so as to be correctly identified by the control unit Cn. The positions of the instants Tᵢ are advantageously (but not necessarily) predefined and invariable, and the duration of the windows Iᵢ depends on the functional characteristics of the i-th device Qn, which has the possibility of responding after each synchronizing signal Sync because it has a dedicated time interval Iᵢ, while in known bus systems each device Q is polled individually (by means of a respective address).

In a window Iᵢ, therefore, only one device Qn transmits, occupying the bus. Moreover, in respect of the above, the control unit Cn is able, by known means:
- to transmit on the bifilar line a synchronizing signal Sync;
- to receive after the synchronizing signal Sync a response signal from each device Qn only in a reserved time window Iᵢ having a predefined position with respect to said synchronizing signal Sync.

A communications network is established such as to use therefore only one bifilar cable (advantageously without imposed polarity) to which the different peripheral devices (operating or control devices) may be connected.

This network allows a high transmission speed for the data and/or commands and therefore guarantees the safety of the system since:
(i) a very fast response to dangerous events is obtained;
(ii) the time required for the response of the peripheral devices (typical of a master/slave system) are eliminated;
(iii) the time required for addressing the command and/or information and associated encoding/decoding times are eliminated.

Even increasing the number of peripheral devices installed, the total data transmission time is 50% less than that for buses of the known art; in known buses each transmission envisages a polling + response between master and slave (2 data), while in the bus according to the invention each transmission envisages only one response.

The signal Sync may in turn be encoded, by means of encoding means, such that the control unit is able to send information and/or data which are received by the peripheral devices.

The invention may also allows the two-way communication between components on the bus: a component can interpret the information which is sent on the bus depending on the temporal position of the communication interval Iᵢ since it may have a fixed position (in the known buses only the control unit interprets the information which it itself requested). The signal sent by any one of the peripheral devices is introduced into the bus network and is available to all the devices, as well as to the control unit. In this way, for example, a flashing lamp can start a "courtesy light" mode if it detects in the bus network a signal of "opening" sent to the control unit by a control device (key-operated selector, keypad).

Communication on the bus may advantageously also be performed in Low Power Mode. In this case the control unit Cn does not generate the synchronizing signal Sync, and its absence alerts all the devices that they may enter in a low power condition (Sleep Mode). This decision is reached owing to processing means in the control unit Cn, which are able to interrupt the transmission of the synchronizing signal (Sync) and enter into Low Power Mode.

The components are reactivated into Normal Mode when the control unit decides autonomously to re-introduce onto the bus the signal Sync or when a control device (keypad or actuating photocell) transmits a signal on the bus. The control unit Cn detects this signal and reverts to Normal Mode. For this purpose, the peripheral components Qn comprise processing means which are able to select a low power operating mode when no synchronizing signal is emitted by the control unit Cn.

The switch-over to Low Power Mode occurs as a result of an autonomous decision of the control unit Cn which, when the gate is in the closed condition, allows a reduction in the power consumption of the system.

The Low Power Mode is particularly useful in the case of battery or photovoltaic panel powered systems.

The signal Sync may also be used in additional Modes.

In the case already considered, T_{B} is divided into as many time windows as there are peripheral devices Qn (apart from possible minor temporal deviations between one window and the next, necessary for correct management of the timing).

At the same time, the photocells, which receive the signal Sync from the bus and process it using processing means, divide internally the period T_{B} further into as many time windows as there are pairs of photocells, and each receiver Rx and transmitter Tx of each pair is automatically assigned a precise time window inside which it may operate.

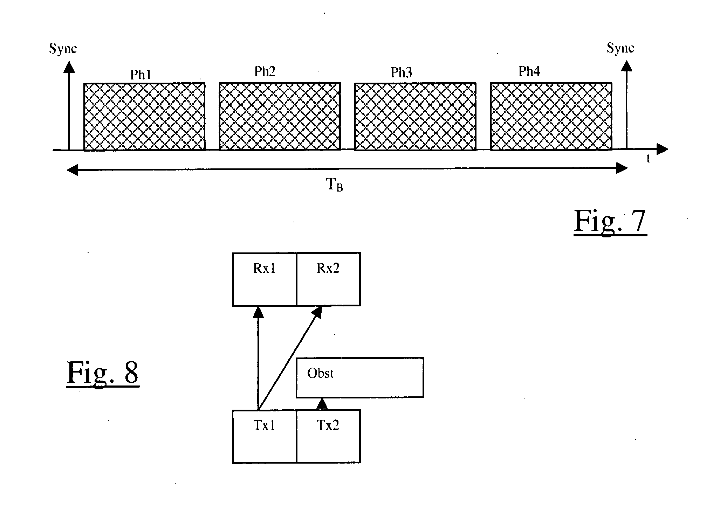

An example of four pairs of photocells can be seen in Fig. 7. The time interval T_{B} is divided into 4 time windows Ph1, Ph2, Ph3, Ph4 within which the photocells are activated alternately, i.e. the phototransmitter Tx1 and the receiver Rx1 of the first photocell are activated only in the window Ph1, while the phototransmitter Tx2 and the receiver Rx2 of the second photocell are activated only in the window Ph2 and so on. The phototransmitter Tx1 sends the infrared beam and the corresponding receiver Rx1 receives and analyses the corresponding signal thereof via the processing means; the same applies to Tx2 and Rx2.

In this way the photocells are immune from mutual interference: if they were all always active, a receiver could receive the beam (see arrows in Figure) from the transmitter of another pair (see Fig. 8 showing the case where there are two pairs). The receiver Rx2 could receive the beam of Tx1 and signal that there is no obstacle Obst present. Since, instead, Rx1 and Tx1 are activated at different times from Rx2 and Tx2, when Rx2 analyses the beam received it detects the obstacle Obst because Tx1 is switched off and the obstacle is blocking the beam of Tx2.

The receiver photocell Rx, after receiving the signal from the corresponding transmitter photocell Tx, sends a signal to the control unit by means of the bus during its own time window from among those Iᵢ assigned on the bus.

It has therefore been shown that the invention is able to simplify wiring and installation of the system and therefore reduce costs. The costs for production of the motor unit and the system installation times are reduced compared to a considerable increase in the performance of the system.

## Claims

1. Actuating system for moving gates, roller shutters or the like, in which the transmission of signals between a control unit C (18) and peripheral components (17, 19, 20, 21, 22, 24) Qₙ is performed using a transmission protocol on a bus system (10), the system comprising a control unit and peripheral components Qn, **characterized in that** each peripheral component Qn is designed only to transmit its own signal to the control unit Cn solely within a time window Iᵢ situated in a predetermined position with respect to a period TB for scanning the status of the peripheral components of the system (10); wherein the control unit Cn comprises a transmitter stage adapted to transmit on the bus a synchronizing signal Sync, the period T_{B} of which defines the period T_{B} for scanning the status of the peripheral components Qn of the system (10) and wherein at least two peripheral components are photocell devices having a receiver Rx and a transmitter Tx, and such photocell device, which receive the signal Sync from the bus and process it using processing means, divide internally the said period T_{B} further into as many time windows as there are pairs of photocell devices, and each receiver Rx and transmitter Tx of each pair is automatically assigned a precise time window inside which it may operate.

2. System according to Claim 1 , in which each time window Iᵢ has an invariable duration.

3. System according to Claim 1 or 2, in which each time window Iᵢ is associated univocally with a peripheral component Qn.

4. System according to Claim 1, in which said transmitter stage is adapted to transmit periodically on the bus the synchronizing signal Sync.

5. System according to Claim 1 or 4, in which the time window Iᵢ of each peripheral component Qn has a constant delay with respect to the synchronizing signal Sync so as to be in a temporal position which is invariable between two successive synchronizing signals Sync.

6. System according to one of Claims 1 to 5, in which the control unit Cn is designed to interrupt transmission of the synchronizing signal Sync and assume a Low-Power operating Mode, the absence of the synchronizing signal being interpreted by the peripheral components as a command to enter into a low-power operating mode.

7. System according to one of the preceding claims, in which the bus consists of a bifilar line.

8. System in according to claim 1, in which the signal sent by any one of the peripheral components Qn is introduced into the bus and it is available to all other peripheral components, as well as the control unit, and the other peripheral components are adapted to interpret the signal transmitted on the bus by the other components during their time windows.

9. Peripheral component Qn, comprising transmission means adapted to transmit a signal to a control unit Cn solely within a time window Iᵢ situated in a predetermined position with respect to a period T_{B} for scanning the status of the peripheral components according to the system (10) of claim 1, and comprising detection means for detecting a synchronizing signal Sync of the control unit Cn and establishing the position of its own transmission time window Iᵢ, and the peripheral component is a photocell device comprising a receiver Rx and a transmitter Tx and means to receive the signal Sync from the bus, processing means to process said Sync signal, means to divide internally said period TB further into as many time windows as there are pairs of photocells device, where each receiver Rx and transmitter Tx of each pair is automatically assigned a precise time window inside which the photocell device operates.

10. Peripheral component Qn according to Claim 9, comprising processing means adapted to select a low-power operating mode when no synchronizing signal is emitted by the control unit Cn.

11. Peripheral component Qn according to Claim 10, in which the detection means are also adapted to interpret and process the information transmitted on the bus by the other components of the system during their time windows Iᵢ.

12. Peripheral component Qn according to one of Claims 9 to 11, comprising rectifier means adapted to make it indifferent to the polarity of the signals on the bus.

13. Peripheral component Qn according to on of Claims 9 to 12, comprising rectifier and filtering means for obtaining a power supply voltage from the maximum value of the voltage V_{B} on the bus.

14. Peripheral component Qn according to one of Claims 9 to 13, **characterized in that** it is a photocell.

15. Peripheral component Qn according to Claim 14, in which the detection means are also adapted to obtain from the period of a synchronizing signal Sync transmitted by the control unit Cn a time window only in which the respective emitter Tx and radiation sensor Rx are active, the time window not coinciding with that of other photocells.

16. Method for transmitting signals between a control unit Cn and peripheral components Qn comprising a receiver Rx and a transmitter Tx on a bus used in an actuating system (10) for moving gates, roller shutters or the like, comprising the steps of:
- assigning to each peripheral component Qn a predefined time window Iᵢ inside which only said peripheral component is allowed to transmit its signal to the control unit Cn;
- transmitting by the control unit Cn, on the bus, a synchronizing signal Sync, the period TB of which defines the period TB for scanning the status of the peripheral components Qn, according to the system of claim 1;
at each peripheral component Qn,
- receiving a signal Sync from the bus;
- processing said Sync signal;
- dividing internally said period TB further into as many time windows as there are pairs of photocell devices;
- automatically assigning a precise time window to each receiver Rx and transmitter Tx of each pair, inside which the photocell device operates.

17. Method according to Claim 16 in which the predefined time window Iᵢ has an invariable duration.

## Patentansprüche

1. Betätigungssystem für bewegliche Tore, Rollladen oder dergleichen, in dem die Übertragung von Signalen zwischen einer Steuerungseinheit C (18), Cn und Peripheriekomponenten (17, 19, 20, 21, 22, 24) Qn unter Verwendung eines Übertragungsprotokolls in einem Bussystem (10) ausgeführt wird, wobei das System eine Steuerungseinheit und Peripheriekomponenten Qn aufweist, **dadurch gekennzeichnet, dass**
jede Peripheriekomponente Qn konzipiert ist, ausschließlich innerhalb eines Zeitfensters Iᵢ, das in einer vorbestimmten Position bezüglich einer Zeitdauer TB zum Überprüfen des Zustands der Peripheriekomponenten des Systems (10) gelegen ist, ihr eigenes Signal nur zu der Steuerungseinheit Cn zu übertragen; wobei die Steuerungseinheit Cn eine Senderstufe aufweist, die angepasst ist, ein Synchronisierungssignal Sync, dessen Zeitdauer T_{B} die Zeitdauer T_{B} zum Überprüfen des Zustands der Peripheriekomponenten Qn des Systems (10) definiert, auf den Bus zu übertragen, und wobei zumindest zwei Peripheriekomponenten Fotozelleneinrichtungen sind, die einen Empfänger Rx und einen Sender Tx haben, und derartige Fotozelleneinrichtungen, die das Signal Sync von dem Bus empfangen und unter Verwendung eines Verarbeitungsmittels verarbeiten, die Zeitdauer T_{B} intern in so viele Zeitfenster unterteilen, als Paare von Fotozelleneinrichtungen vorhanden sind, und jedem Empfänger Rx und Sender Tx von jedem Paar automatisch ein genaues Zeitfenster zugewiesen wird, innerhalb dessen es arbeiten kann.

2. System gemäß Anspruch 1, in dem jedes Zeitfenster Iᵢ eine unveränderliche Dauer hat.

3. System gemäß Anspruch 1 oder 2, in dem jedes Zeitfenster Iᵢ eindeutig einer Peripheriekomponente Qn zugeordnet ist.

4. System gemäß Anspruch 1, in dem die Senderstufe angepasst ist, das Synchronisierungssignal Sync periodisch auf den Bus zu übertragen.

5. System gemäß Anspruch 1 oder 4, in dem das Zeitfenster Iᵢ von jeder Peripheriekomponente Qn eine konstante Verzögerungszeit bezüglich des Synchronisierungssignals Sync hat, um in einer zeitlichen Position zu sein, die zwischen zwei aufeinander folgenden Synchronisierungssignalen Sync unveränderlich ist.

6. System gemäß einem der Ansprüche 1 bis 5, in dem die Steuerungseinheit Cn konzipiert ist, eine Übertragung des Synchronisierungssignals Sync zu unterbrechen und eine Betriebsart mit niedriger Leistung anzunehmen, wobei das Ausbleiben des Synchronisierungssignals von den Peripheriekomponenten als ein Befehl interpretiert wird, in eine Betriebsart mit niedriger Leistung einzutreten.

7. System gemäß einem der vorangehenden Ansprüche, in dem der Bus aus einer Zweidrahtleitung besteht.

8. System gemäß Anspruch 1, in dem das durch irgend eines der Peripheriekomponenten Qn gesendete Signal in den Bus eingebracht wird und es sowohl allen anderen Peripheriekomponenten als auch der Steuerungseinheit zur Verfügung steht, und die anderen Peripheriekomponenten angepasst sind, das durch die anderen Komponenten während ihrer Zeitfenster auf dem Bus übertragene Signal zu interpretieren.

9. Peripheriekomponente Qn, ein Übertragungsmittel aufweisend, das angepasst ist, ein Signal ausschließlich innerhalb eines Zeitfensters Iᵢ, das bezüglich einer Zeitdauer TB zum Überprüfen des Zustands der Peripheriekomponenten entsprechend dem System (10) von Anspruch 1 in einer vorbestimmten Position gelegen ist, zu einer Steuerungseinheit zu senden, und Erfassungsmittel zum Erfassen eines Synchronisierungssignals Sync der Steuerungseinheit Cn und zum Einrichten der Position seines eigenen Übertragungszeitfensters Iᵢ aufweisend, wobei die Peripheriekomponente eine Fotozelleneinrichtung ist, die einen Empfänger Rx und einen Sender Tx und ein Mittel zum Empfangen des Signals Sync von dem Bus, ein Verarbeitungsmittel, um das Sync-Signal zu verarbeiten, ein Mittel zum internen weiteren Unterteilen der Zeitdauer TB in so viele Zeitfenster, als Paare von Fotozelleneinrichtungen vorhanden sind, aufweist, wobei jeder Empfänger Rx und Sender Tx von jedem Paar automatisch einem genauen Zeitfenster zugewiesen wird, innerhalb dessen die Fotozelleneinrichtung arbeitet.

10. Peripheriekomponente Qn gemäß Anspruch 9, ein Verarbeitungsmittel aufweisend, das angepasst ist, eine Betriebsart mit niedriger Leistung auszuwählen, wenn kein Synchronisierungssignal durch die Steuerungseinheit Cn ausgegeben wird.

11. Peripheriekomponente Qn gemäß Anspruch 10, in der die Erfassungsmittel auch angepasst sind, die von den anderen Komponenten des Systems auf den Bus übertragene Information während ihres Zeitfensters Iᵢ zu interpretieren und zu verarbeiten.

12. Peripheriekomponente Qn gemäß einem der Ansprüche 9 bis 11, aufweisend ein Gleichrichtermittel, das angepasst ist, sie gegenüber der Polarität der Signale auf dem Bus indifferent zu machen.

13. Peripheriekomponente Qn gemäß einem der Ansprüche 9 bis 12, einen Gleichrichter und ein Filtermittel aufweisend, um eine Versorgungsspannung mit dem maximalen Wert der Spannung V_{B} auf dem Bus zu erzielen.

14. Peripheriekomponente Qn gemäß einem der Ansprüche 9 bis 13, **dadurch gekennzeichnet, dass** sie eine Fotozelle ist.

15. Peripheriekomponente Qn gemäß Anspruch 14, in der die Erfassungsmittel auch angepasst sind, von der Zeitdauer eines durch die Steuerungseinheit Cn übertragenen Synchronisierungssignals Sync nur ein Zeitfenster zu erhalten, in dem der jeweilige Sender Tx und Strahlungssensor Rx aktiv sind, wobei das Zeitfenster nicht mit dem von anderen Fotozellen übereinstimmt.

16. Verfahren zum Übertragen von Signalen zwischen einer Steuerungseinheit Cn und Peripheriekomponenten Qn, die einen Empfänger Rx und einen Sender Tx in einem Betätigungssystem (10) für bewegliche Tore, Rollladen oder dergleichen verwendeten Bus aufweisen, aufweisend die Schritte:
- Zuweisen eines vordefinierten Zeitfensters Iᵢ, innerhalb dessen es nur der Peripheriekomponente ermöglicht ist, ihr Signal an die Steuerungseinheit Cn zu übertragen;
- Übertragen eines Synchronisierungssignals Sync durch die Steuerungseinheit Cn auf dem Bus, wobei dessen Zeitdauer TB die Zeitdauer TB zum Überprüfen des Zustands der Peripheriekomponenten Qn gemäß dem System von Anspruch 1 definiert;
bei jeder Peripheriekomponente Qn;
- Empfangen eines Signals Sync von dem Bus;
- Verarbeiten des Sync-Signals;
- internes weiteres Unterteilen der Zeitdauer TB in so viele Zeitfenster, als Paare von Fotozelleneinrichtungen vorhanden sind;
- automatisches Zuweisen eines genauen Zeitfensters an jeden Empfänger Rx und Sender Tx von jedem Paar, innerhalb dessen die Fotozelleneinrichtung arbeitet.

17. Verfahren gemäß Anspruch 16, in dem das vordefinierte Zeitfenster Iᵢ eine unveränderliche Dauer hat.

## Revendications

1. Système d'actionnement de portes mobiles, de volets roulants ou d'éléments similaires, dans lequel la transmission de signaux entre une unité de commande C (18), Cn, et des composants périphériques (17, 19, 20, 21, 22, 24) Qₘ, est mise en oeuvre en utilisant un protocole de transmission sur un système de bus (10), le système comprenant une unité de commande et des composants périphériques Qₙ, **caractérisé en ce que** chaque composant périphérique Qn est conçu uniquement de manière à transmettre son propre signal à l'unité de commande Cn, exclusivement au cours d'une fenêtre temporelle Iᵢ située dans une position prédéterminée par rapport à une période TB destinée à balayer l'état des composants périphériques du système (10) ; dans lequel l'unité de commande Cn comprend un étage d'émetteur apte à transmettre, sur le bus, un signal de synchronisation Sync, dont la période T_{B} définit la période T_{B} destinée à balayer l'état des composants périphériques Qn du système (10), et dans lequel au moins deux composants périphériques représentent des dispositifs à cellules photoélectriques présentant un récepteur Rx et un émetteur Tx, et un tel dispositif à cellules photoélectriques, qui reçoivent le signal Sync en provenance du bus et le traitent en utilisant un moyen de traitement, qui divisent en interne en outre ladite période T_{B} en autant de fenêtres temporelles qu'il existe de paires de dispositifs à cellules photoélectriques, et où chaque récepteur Rx et émetteur Tx de chaque paire se voit automatiquement affecter une fenêtre temporelle précise dans laquelle il peut fonctionner.

2. Système selon la revendication 1, dans lequel chaque fenêtre temporelle Iᵢ présente une durée invariable.

3. Système selon la revendication 1 ou 2, dans lequel chaque fenêtre temporelle Iᵢ est associée de manière univoque à un composant périphérique Qn.

4. Système selon la revendication 1, dans lequel ledit étage d'émetteur est apte à émettre périodiquement, sur le bus, le signal de synchronisation Sync.

5. Système selon la revendication 1 ou 4, dans lequel la fenêtre temporelle Iᵢ de chaque composant périphérique Qn présente un retard constant par rapport au signal de synchronisation Sync, de manière à être dans une position temporelle qui est invariable entre deux signaux de synchronisation Sync successifs.

6. Système selon l'une quelconque des revendications 1 à 5, dans lequel l'unité de commande Cn est conçue de manière à interrompre la transmission du signal de synchronisation Sync et à entrer dans un mode de fonctionnement à faible puissance, l'absence du signal de synchronisation étant interprétée par les composants périphériques comme une commande visant à entrer dans un mode de fonctionnement à faible puissance.

7. Système selon l'une quelconque des revendications précédentes, dans lequel le bus est constitué d'une ligne bifilaire.

8. Système selon la revendication 1, dans lequel le signal envoyé par l'un quelconque des composants périphériques Qn est introduit dans le bus, et il est disponible à tous les autres composants périphériques, ainsi qu'à l'unité de commande, et les autres composants périphériques sont aptes à interpréter le signal transmis sur le bus par les autres composants au cours de leurs fenêtres temporelles.

9. Composant périphérique, Qn, comprenant un moyen de transmission apte à transmettre un signal à une unité de commande Cn exclusivement au cours d'une fenêtre temporelle Iᵢ située dans une position prédéterminée par rapport à une période T_{B} destinée à balayer l'état des composants périphériques du système (10) selon la revendication 1, et comprenant un moyen de détection pour détecter un signal de synchronisation Sync de l'unité de commande Cn et établir la position de sa propre fenêtre temporelle de transmission Iᵢ, et dans lequel le composant périphérique est un dispositif à cellules photoélectriques comprenant un récepteur Rx et un émetteur Tx, et un moyen pour recevoir le signal Sync en provenance du bus, un moyen de traitement pour traiter ledit signal de synchronisation Sync, un moyen pour diviser en interne en outre ladite période TB en autant de fenêtres temporelles qu'il existe de paires de dispositifs à cellules photoélectriques, où chaque récepteur Rx et émetteur Tx de chaque paire se voit affecter automatiquement une fenêtre temporelle précise dans laquelle le dispositif à cellules photoélectriques fonctionne.

10. Composant périphérique Qn selon la revendication 9, comprenant un moyen de traitement apte à sélectionner un mode de fonctionnement à faible puissance lorsqu'aucun signal de synchronisation n'est émis par l'unité de commande Cn.

11. Composant périphérique Qn selon la revendication 10, dans lequel le moyen de détection est également apte à interpréter et à traiter les informations transmises sur le bus par les autres composants du système au cours de leurs fenêtres temporelles Iᵢ.

12. Composant périphérique Qn selon l'une quelconque des revendications 9 à 11, comprenant un moyen de redressement apte à le rendre indifférent à la polarité des signaux sur le bus.

13. Composant périphérique Qn selon l'une quelconque des revendications 9 à 12, comprenant un moyen de filtrage et de redressement pour obtenir une tension d'alimentation électrique à partir de la valeur maximale de la tension V_{B} sur le bus.

14. Composant périphérique Qn selon l'une quelconque des revendications 9 à 13, **caractérisé en ce qu'**il est une cellule photoélectrique.

15. Composant périphérique Qn selon la revendication 14, dans lequel le moyen de détection est également apte à obtenir, à partir de la période d'un signal de synchronisation Sync transmis par l'unité de commande Cn, une fenêtre temporelle dans laquelle uniquement l'émetteur Tx respectif et le capteur de rayonnement Rx respectif sont actifs, la fenêtre temporelle ne coïncidant pas avec celle d'autres cellules photoélectriques.

16. Procédé de transmission de signaux entre une unité de commande Cn et des composants périphériques Qn comprenant un récepteur Rx et un émetteur Tx sur un bus utilisé dans un système d'actionnement (10) pour portes mobiles, volets roulants ou éléments similaires, comprenant les étapes ci-dessous consistant à :
- affecter, à chaque composant périphérique Qn, une fenêtre temporelle prédéfinie Iᵢ, dans laquelle seul ledit composant périphérique est autorisé à transmettre son signal à l'unité de commande Cn ;
- transmettre, par le biais de l'unité de commande Cn, sur le bus, un signal de synchronisation Sync dont la période TB définit la période TB destinée à balayer l'état des composants périphériques Qn, selon le système selon la revendication 1 ;
au niveau de chaque composant périphérique Qn :
- recevoir un signal de synchronisation Sync en provenance du bus ;
- traiter ledit de synchronisation Sync ;
- diviser en interne en outre la période TB en autant de fenêtres temporelles qu'il existe de paires de dispositifs à cellules photoélectriques ;
- affecter automatiquement une fenêtre temporelle précise à chaque récepteur Rx et émetteur Tx de chaque paire, dans laquelle le dispositif à cellules photoélectriques fonctionne.

17. Procédé selon la revendication 16, dans lequel la fenêtre temporelle prédéfinie Iᵢ présente une durée invariable.
